# EUROPÄISCHE PATENTSCHRIFT

(11) **EP 4 256 678 B1**
(45) Veröffentlichungstag und Bekanntmachung des Hinweises auf die Patenterteilung: **16.09.2026**
(21) Anmeldenummer: 21823752.7
(22) Anmeldetag: 18.11.2021
(51) Int. Cl.: H02K 3/50

(54) **STATOR EINES ELEKTROMOTORS UND VERFAHREN ZU SEINER HERSTELLUNG**
STATOR OF AN ELECTRIC MOTOR, AND PROCESS FOR MANUFACTURING SAME
STATOR D'UN MOTEUR ÉLECTRIQUE ET SON PROCÉDÉ DE FABRICATION

(30) Priorität: 03.12.2020 DE 102020132144
(43) Veröffentlichungstag der Anmeldung: 11.10.2023
(73) Patentinhaber: Bühler Motor GmbH, 90459 Nürnberg (DE)
(72) Erfinder: BRETTSCHNEIDER, Jürgen, 90482 Nürnberg (DE); BAUMANN, Markus, 90530 Wendelstein (DE); BONK, Georg, 90522 Oberasbach (DE); GOLDITZ, Paul-Peter, 90419 Nürnberg (DE); RIESS, Jürgen, 90427 Nürnberg (DE)
(86) Internationale Anmeldenummer: PCT/DE2021/200195
(87) Internationale Veröffentlichungsnummer: WO 2022/117159

(56) Entgegenhaltungen:
- WO-A1-2019/141344
- DE-A1- 102019 205 121
- DE-A1- 102019 210 146

## Beschreibung

Die Erfindung betrifft einen Stator für einen Elektromotor gemäß den Ansprüchen 1 und 2 sowie Verfahren zur Herstellung eines Stator für einen Elektromotor gemäß den Ansprüchen 7 und 8.

Beispielsweise kommen Elektromotoren bei Automobilien zum Einsatz. Die Elektromotoren sind erhöhten Belastungen ausgesetzt, unter anderem durch die entstehenden Vibrationen bei Benutzung eines Fahrzeugs. Es muss daher sichergestellt werden, dass die Verbindungen der Komponenten des Elektromotors auch nach längerer Dauer nicht beschädigt werden. So dürfen die Kontaktstellen an einem Stator durch dauerhafte Vibrationsbelastung nicht brechen. Es ist bekannt, Schneid-Klemmverbindungen an bewickelten Statoren zur elektrischen Kontaktierung mit einer Kontakteinheit vorzusehen. Diese haben jedoch insbesondere bei kleineren Drahtdurchmessern den Nachteil, unter thermischer Belastung und unter Vibration messbare Veränderung des Widerstandes aufzuweisen. Auch ist der benötigte Bauraum durch die Geometrie der Schneid-Klemmkörper erhöht, sowie eine gewisse Einschränkung bei den verwendbaren Strömen gegeben.

Aus der DE 10 2019 205 121 A1 ist ein Stator für einen Elektromotor bekannt, umfassend einen Statorkern mit mindestens einen Statorpol, einer Statorwicklung, die aus einem durchgängigen Wicklungsdraht gebildet ist, und einem Verschaltungsmittel mit mindestens einer Kontaktzunge, wobei der Wicklungsdraht (Drahtende 11a) mit mindestens einer Kontaktzunge verschweißt ist.

Die WO 2019/141344 A1 offenbart einen Stator für einen Elektromotor, umfassend einen Statorkern mit mindestens einen Statorpol, einer Statorwicklung (Spule), die aus einem durchgängigen Wicklungsdraht gebildet ist, und einem Verschaltungsmittel mit mindestens einer Kontaktzunge, wobei der Wicklungsdraht mit mindestens einer Kontaktzunge verschweißt ist. Die Kontaktzunge umfasst zwei Schenkel, die in axialer Richtung ausgerichtet sind, wobei der erste Schenkel kürzer ist als der zweite Schenkel.

Aus der EP 3764512 A1 ist ein Verfahren zur Herstellung eines Stator für einen Elektromotor bekannt, wobei der Stator umfasst: einen Statorkern mit mindestens einem Statorpol, einer Statorwicklung, die aus einem durchgängigen Wicklungsdraht gebildet ist, und einem Verschaltungsmittel mit mindestens einer Kontaktzunge, gekennzeichnet durch folgende Verfahrensschritte: a) Einlegen des Stators in eine Wicklungseinrichtung; b) Bewickeln jeweils eines Statorpols des Stators mit dem Wicklungsdraht, wobei der Wicklungsdraht zwischen zwei Polen mit einer radialen Komponente über den Durchmesser des Statorkerns hinaus um einen Ausleger herum und unter Bildung einer Leiterschleife winkelversetzt zu einem nachfolgend zu bewickelnden Statorpol radial nach innen geführt wird; c) Durchtrennung der Leiterschleife in mindestens einem Leiterschleifbereich der Leiterschleife; d) Abtrennen des Auslegers und e) Anordnen mindestens eines Verschaltungsmittels. Dieses Dokument ist Stand der Technik nach Art.54(3) EPÜ.

Aufgabe der Erfindung ist eine elektrische Kontaktierung von Wicklungsdrähten eines bewickelten Stators und einer Kontakteinheit mit kleinstmöglichem elektrischem Widerstand, die insbesondere obig genannte Nachteile überwindet.

Diese Aufgabe wird gelöst durch einen Stator für einen Elektromotor gemäß Anspruch 1 oder Anspruch 2, sowie durch Verfahren zur Herstellung eines Stator für einen Elektromotor gemäß der Ansprüche 7 und 8. Weiterbildungen der Erfindung werden in den abhängigen Ansprüchen dargestellt.

Ein Stator für einen Elektromotor umfasst einen Statorkern mit mindestens einem Statorpol, einer Statorwicklung, die aus einem durchgängigen Wicklungsdraht gebildet ist und einem Verschaltungsmittel mit mindestens einer Kontaktzunge.

Gemäß der Erfindung ist der Wicklungsdraht mit mindestens einer Kontaktzunge verschweißt, insbesondere durch Laserschweißen. Hierdurch entsteht eine elektrisch leitende Verbindungsstelle zwischen dem Wicklungsdraht und dem Verschaltungsmittel. Neben Laserschweißen sind auch andere Verfahren zur thermischen oder stoffschlüssigen Verbindung denkbar. Der Wicklungsdraht wird bevorzugt vor dem Schweißen getrennt.

Der Stator ist in Stern- und Dreieckschaltung in Reihe oder parallel mit einem aus Kupfer bestehenden Wicklungsdraht gewickelt verschalten.

Am Stator können eine oder mehrere Isolierkappen vorgesehen sein. Es ist aber auch möglich, den Stator komplett mit Isoliermaterial (Kunststoff) zu umspritzen.

Im Gegensatz zu einer Schneidklemmverbindung, die insbesondere bei kleineren Drahtquerschnitten üblich ist, weist eine derartige Verbindungsstelle auch unter thermischer Belastung und unter Vibration keine messbare Veränderung des Widerstandes auf. Der benötigte Bauraum für diese Verbindung ist kleiner als bei einer Schneid-Klemmverbindung. Durch die geometrische Ausführung der Kontaktstellen ist es möglich kleinere Drahtquerschnitte mit einer integrierten Zugentlastung sicher mit dem Verschaltungsmittel zu verbinden bei gleichzeitig kleinstmöglichen elektrischen Widerstand. Spannungen im Wicklungsdraht werden bei Sicherstellung einer guten Kontaktierung minimiert. Zudem werden die Kerbwirkung und die Härtesäcke reduziert.

Die Kontaktzunge umfasst zwei Schenkel, die in axialer Richtung ausgerichtet sind und eine unterschiedliche Länge aufweisen. Ein Wicklungsdrahtende verläuft innerhalb der Kontaktzunge parallel zu den Schenkeln und ist mit dem zweiten Schenkel verschweißt.

Ferner beruht die Erfindung auf dem Gedanken, dass die Kontaktzunge zwei Schenkel umfasst, wobei der erste Schenkel in Richtung Ordinatenachse und der zweite Schenkel in Richtung der Applikatenachse ausgerichtet sind und eine unterschiedliche Länge aufweisen und dass ein Wicklungsdrahtende unter Bildung einer Drahtschleife um einen Außenbereich des ersten Schenkels herum in Richtung des zweiten Schenkels der Kontaktzunge verläuft und mit dem zweiten Schenkel verschweißt ist. Die Ordinatenachse (axiale Richtung) entspricht der y-Koordinate und die Applikatenachse der z-Koordinate in einem x-y-z-Koordinatensystem. Die Kontaktzunge mit den Schenkel ist bevorzugt durch Ausstanzen hergestellt. Die Geometrie der Schenkel ist vorgegeben. Nach dem Ausstanzen der Kontaktzungen erstrecken sich die Schenkel in axialer Richtung. Der zweite Schenkel wird im Anschluss Richtung Applikatenachse gebogen**.**

Erfindungsgemäß ist der erste Schenkel kürzer als der zweite Schenkel. Dies hat den Vorteil, dass der Wicklungsdraht auf dem zweiten Schenkel verschweißt werden kann und dadurch vorteilhaft Spannungsrisse vermieden werden. Zudem kann bei der Schweißung eine saubere Schmelzverbindung in Form einer Schmelzkugel gebildet werden, da das Schmelzgut nur mit dem zweiten Schenkel in Verbindung steht. Weiterhin ist vorgesehen, dass die Kontaktzunge einen Drahtaufnahmebereich zwischen dem ersten und zweiten Schenkel umfasst, dessen Breite mindestens dem Durchmesser des Wicklungsdrahtes entspricht. Hierdurch kann vorteilhafterweise eine vorzeitige Verklemmung und Fixierung des Wicklungsdraht erreicht werden.

In einer weiteren Ausbildung der Erfindung verläuft der Wicklungsdraht zwischen den zwei Schenkeln und ist mit dem zweiten Schenkel verschweißt. Dies hat den Vorteil, dass der Wicklungsdraht auf dem zweiten Schenkel verschweißt werden kann und dadurch vorteilhaft Spannungsrisse vermieden werden. Zudem kann bei der Schweißung eine saubere Schmelzverbindung in Form einer Schmelzkugel gebildet werden, da das Schmelzgut nur mit dem zweiten Schenkel in Verbindung steht.

In einer Ausführung der Erfindung ist das Verschaltungsmittel als mindestens ein Kontaktblech ausgebildet.

Es kann vorgesehen sein, dass mindestens ein Verschaltungsmittel einstückig ausgebildet ist. Das Verschaltungsmittel kann beispielsweise als rundes Blech ausgebildet sein. Die Form des Verschaltungsmittels ist jedoch grundsätzlich variabel, üblicherweise werden unterbrochene Verschaltungsmittel verwendet.

Die Anzahl der Kontaktzungen am Verschaltungsmittel ist abhängig vom verwendeten Wicklungsverfahren. Gemäß der Erfindung kann die Wicklung des Stators in Stern- oder Dreieckschaltung jeweils in Reihe oder parallel mit einem aus Kupfer bestehenden Wicklungsdraht gewickelt verschalten sein.

Es ist weiterhin ein erfindungsgemäßes Verfahren zur Herstellung eines Stator für einen Elektromotor nach Anspruch 1 vorgesehen. Dieses Verfahren umfasst folgende Schritte, die zeitlich aufeinander folgen:
a) Einlegen des Stators in eine Wicklungseinrichtung;
b) Bewickeln jeweils eines Statorpols des Stators mit dem Wicklungsdraht, wobei der Wicklungsdraht zwischen zwei Polen mit einer radialen Komponente über den Durchmesser des Statorkerns hinaus um einen Ausleger herum und unter Bildung einer Leiterschleife winkelversetzt zu einem nachfolgend zu bewickelnden Statorpol radial nach innen geführt wird;
c) Durchtrennung der Leiterschleife in mindestens einem Bereich der Leiterschleife;
d) Abtrennen des Auslegers;
e) Anordnen mindestens eines Verschaltungsmittels;
f) Biegen und Führen mindestens eines Wicklungsdrahtendes der durchtrennten Leiterschleife in Richtung Verschaltungsmittel, derart, dass das Wicklungsdrahtende innerhalb der Kontaktzunge parallel zu den Schenkeln verläuft;
g) Quetschen des Wicklungsdrahtes von außen auf den ersten Schenkel, wobei der erste Schenkel in Richtung des zweiten Schenkel beim Quetschvorgang verschoben wird;
h) Kürzen des Wicklungsdrahtes, bevorzugt auf die Länge des zweiten Schenkels;
i) Verschweißen des Wicklungsdrahtendes mit dem zweiten Schenkel.

Im Gegensatz zu einer Schneidklemmverbindung, die insbesondere bei kleineren Drahtquerschnitten üblich ist, weist eine derartige Verbindungsstelle auch unter thermischer Belastung und unter Vibration keine messbare Veränderung des Widerstandes auf. Der benötigte Bauraum für diese Verbindung ist kleiner als bei einer Schneid-Klemmverbindung. Durch die geometrische Ausführung der Kontaktstellen ist es möglich kleinere Drahtquerschnitte mit einer integrierten Zugentlastung sicher mit dem Verschaltungsmittel zu verbinden bei gleichzeitig kleinstmöglichen elektrischen Widerstand. Spannungen im Wicklungsdraht werden bei Sicherstellung einer guten Kontaktierung minimiert.

Das Quetschen des Wicklungsdrahtes kann mit einem entsprechenden Werkzeug erfolgen, beispielsweise mit einer Zange. Dieses Vorgehen hat den Vorteil, dass der Wicklungsdraht zwischen den zwei Schenkeln fixiert wird und nach dem Durchtrennen der Leiterschleife nicht mehr aus der Kontaktzunge herausrutscht. Das nachfolgende Kürzen kann beispielsweise durch Abscheren erfolgen.

Das Wicklungsdrahtende wird abschließend mit dem zweiten Schenkel in axialer Richtung verschweißt, wobei eine Schweißperle gebildet wird. Das Verschweißen kann beispielsweise mittels eines Schweißautomats erfolgen. Durch das erfindungsgemäße Verfahren entsteht eine elektrisch leitende Verbindungsstelle zwischen dem Wicklungsdraht und den Verschaltungsmitteln.

Am Stator können eine oder mehrere Isolierkappen vorgesehen sein, die in einem optionalen Schritt montiert werden können. Es ist aber auch möglich, den Stator komplett mit Isoliermaterial (Kunststoff) zu umspritzen. Der Ausleger und/oder das Verschaltungsmittel können jeweils mit dieser Isolierung oder Isolierkappe(n) in Verbindung stehen.

Darüber hinaus ist ein alternatives erfindungsgemäßes Verfahren zur Herstellung eines Stator für einen Elektromotor nach Anspruch 2 vorgesehen. Dieses Verfahren umfasst folgende Schritte, die zeitlich aufeinander folgen:
a) Einlegen des Stators in eine Wicklungseinrichtung;
b) Bewickeln jeweils eines Statorpols des Stators mit dem Wicklungsdraht, wobei der Wicklungsdraht zwischen zwei Polen mit einer radialen Komponente über den Durchmesser des Statorkerns hinaus um einen Ausleger herum und unter Bildung einer Leiterschleife winkelversetzt zu einem nachfolgend zu bewickelnden Statorpol radial nach innen geführt wird;
c) Durchtrennung der Leiterschleife in mindestens einem Bereich der Leiterschleife;
d) Abtrennen des Auslegers;
e) Anordnen mindestens eines Verschaltungsmittels;
f) Biegen und Führen mindestens eines Wicklungsdrahtendes der durchtrennten Leiterschleife in Richtung Verschaltungsmittel, derart, dass das Wicklungsdrahtende unter Bildung einer Drahtschleife um einem Außenbereich eines erstes Schenkels herum in Richtung eines zweiten Schenkels der Kontaktzunge verläuft;
g) Kürzen des Wicklungsdrahtes, bevorzugt auf die Länge des zweiten Schenkels;
h) Verschweißen des Wicklungsdrahtendes mit dem zweiten Schenkel.

Im Gegensatz zu einer Schneidklemmverbindung, die insbesondere bei kleineren Drahtquerschnitten üblich ist, weist eine derartige Verbindungsstelle auch unter thermischer Belastung und unter Vibration keine messbare Veränderung des Widerstandes auf. Der benötigte Bauraum für diese Verbindung ist kleiner als bei einer Schneid-Klemmverbindung. Durch die geometrische Ausführung der Kontaktstellen ist es möglich kleinere Drahtquerschnitte mit einer integrierten Zugentlastung sicher mit dem Verschaltungsmittel zu verbinden bei gleichzeitig kleinstmöglichen elektrischen Widerstand. Spannungen im Wicklungsdraht werden bei Sicherstellung einer guten Kontaktierung minimiert.

Der Wicklungsdraht wird unter Bildung einer engen Schleife um den ersten Schenkel herumgebogen und auf die Fläche des zweiten Schenkels aufgelegt. Das nachfolgende Kürzen kann beispielsweise durch Abscheren erfolgen. Das Wicklungsdrahtende wird abschließend mit dem zweiten Schenkel in Richtung Applikatenachse verschweißt, wobei eine Schweißperle gebildet wird. Das Verschweißen kann beispielsweise mittels eines Schweißautomats erfolgen. Durch das erfindungsgemäße Verfahren entsteht eine elektrisch leitende Verbindungsstelle zwischen dem Wicklungsdraht und den Verschaltungsmitteln.

Am Stator können eine oder mehrere Isolierkappen vorgesehen sein, die in einem optionalen Schritt montiert werden können. Es ist aber auch möglich, den Stator komplett mit Isoliermaterial (Kunststoff) zu umspritzen. Der Ausleger und/oder das Verschaltungsmittel können jeweils mit dieser Isolierung oder Isolierkappe(n) in Verbindung stehen.

Besonders bevorzugt weist die Drahtschleife einen engen Radius auf und/oder steht in Kontakt mit dem ersten Schenkel. Die ist vorteilhaft, um die auf den Wicklungsdraht wirkende Zugspannung zu reduzieren.

In einer Variante bildet sich beim Verschweißen des Wicklungsdrahtendes mit dem zweiten Schenkel ein kugelförmiges Schmelzgut aus. Spannungsverteilung vorteilhaft beim Erkalten der Schmelze.

In weiteren Ausbildung der Erfindung umfasst die Kontaktzunge einen Drahtaufnahmebereich zwischen dem ersten und zweiten Schenkel, wobei das Wicklungsdrahtende im Drahtaufnahmebereich fixiert ist oder fixiert werden kann. Durch die Fixierung des Wicklungsdrahtes nach dem Abschneideprozess wird der Draht vor dem ungewollten Herausrutschen aus dem Drahtaufnahmebereich gehindert. Der Drahtaufnahmebereich ist wie schon erläutert auf die verwendete Drahtgröße ausgelegt, also bevorzugt gleich groß gebildet, so dass sich der Wicklungdraht in diesem verklemmt beim Einlegen.

Insbesondere ist das erfindungsgemäße Schweißverfahren ein Laserschweißverfahren. Jedoch sind auch weitere thermische und stoffschlüssige Verbindungsverfahren möglich.

Besonders bevorzugt orientiert sich die Richtung des Laserstrahls am Wicklungsdrahtende und dem zweiten Schenkel.

Der Querschnitt oder der Durchmesser des Wicklungsdrahts kann bevorzugt näherungsweise dem Querschnitt des Schenkels entsprechen. Allerdings sind auch andere Querschnitte oder Durchmesser des Wicklungsdrahts denkbar.

Die Erfindung ist nicht auf die genannten Ausführungsbeispiele beschränkt. Ausführungsvarianten im Rahmen des durch die Ansprüche definierten Schutzbereichs sind möglich.

Ausführungsbeispiele der Erfindung werden nachfolgend anhand der Zeichnungen näher erläutert. Es zeigen:
Fig. 1 zeigt eine räumliche Darstellung eines Stators während des Wickelvorgangs,
Fig. 2 zeigt eine räumliche Darstellung des bewickelten Stators gemäß Figur 1,
Fig. 3 zeigt eine Detailansicht einer Kontaktzunge gemäß Figur 2,
Fig. 4 zeigt eine räumliche Darstellung des bewickelten Stators gemäß Figur 2 nach dem Schweißvorgang,
Fig. 5 zeigt eine Detailansicht der Kontaktzunge gemäß Figur 4,
Fig. 6 zeigt eine räumliche Darstellung des bewickelten Stators gemäß einer weiteren Ausführungsform,
Fig. 7 zeigt eine Detailansicht der Kontaktzunge gemäß Figur 6,
Fig. 8 zeigt eine räumliche Darstellung des bewickelten Stators gemäß Figur 6,
Fig. 9 zeigt eine Detailansicht der Kontaktzunge gemäß Figur 8.

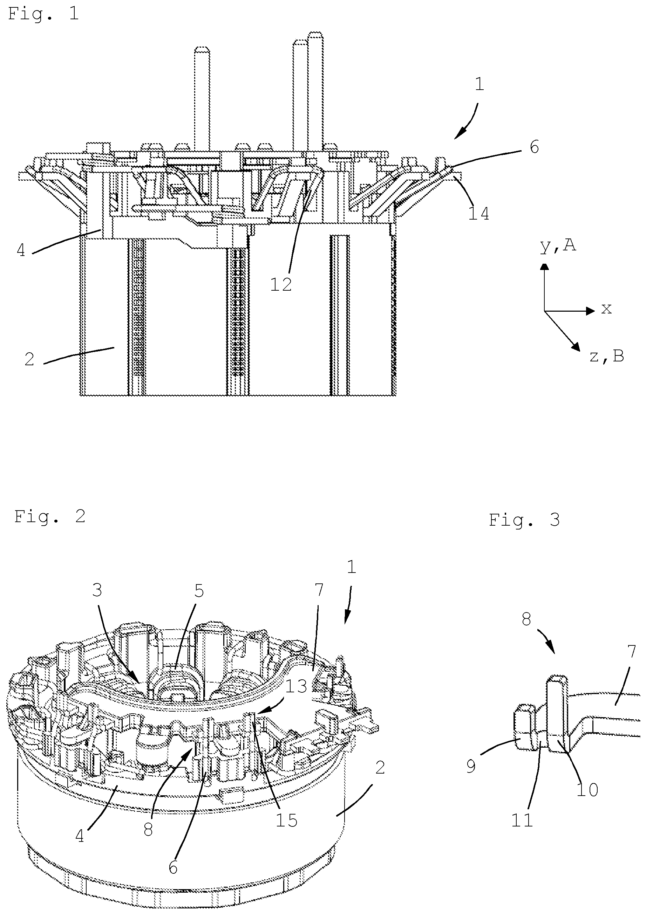

Fig. 1 zeigt eine räumliche Darstellung eines Stators 1 eines Elektromotors während des Wickelvorgangs, umfassend einen Statorkern 2, eine Isolierkappe 4 und radial nach außen ragende Ausleger 14 an der Isolierkappe 4. Der Wicklungsdraht 6 wird um die Ausleger 16 unter Bildung einer Leiterschleife 12 gelegt.

Am Stator können eine oder mehrere Isolierkappen vorgesehen sein, die in einem optionalen Schritt montiert werden können. Es ist aber auch möglich, den Stator komplett mit Isoliermaterial (Kunststoff) zu umspritzen. Der Ausleger und/oder das Verschaltungsmittel können jeweils mit dieser Isolierung oder Isolierkappe(n) in Verbindung stehen.

Fig. 2 zeigt eine räumliche Darstellung eines bewickelten Stators 1 eines Elektromotors umfassend den Statorkern 2 mit mindestens einem Statorpol 3, der Isolierkappe 4, eine Statorwicklung 5, die aus einem durchgängigen Wicklungsdraht 6 gebildet ist und das Verschaltungsmittel 7 mit mindestens einer Kontaktzunge 8. Mit dem durchgängigen Wicklungsdraht 6 werden die Statorpole 5 des Stators 1 bewickelt, wobei der Wicklungsdraht 6 zwischen Polen mit einer radialen Komponente über den Durchmesser des Statorkerns hinaus um den Ausleger 14 herum unter Bildung einer Leiterschleife 12 winkelversetzt zu einem nachfolgend zu bewickelten Statorpol 5 radial nach innen geführt wird (siehe Fig. 1). Die Leiterschleife 12 ist in mindestens einem Leiterschleifenbereich 13 durchtrennt und die Ausleger 14 von der Isolierkappe 4 abgetrennt. Das Wicklungsdrahtende 15 der durchtrennten Leiterschleife 12 wird in Richtung Verschaltungsmittel 7 gebogen und geführt, derart, dass das Wicklungsdrahtende 15 innerhalb der Kontaktzunge 8 parallel zu den Schenkeln 9, 10 verläuft.

Fig. 3 zeigt eine Detailansicht einer Kontaktzunge 8 gemäß Figur 2, die an dem Verschaltungsmittel 7 ausgebildet ist. Die Kontaktzunge 8 umfasst zwei Schenkel 9, 10, die in Richtung der Ordinatenachse A (axiale Richtung) ausgerichtet sind und eine unterschiedliche Länge aufweisen. Der erste Schenkel 9 ist dabei kürzer als der zweite Schenkel 10. Zwischen den zwei Schenkeln 9, 10 der Kontaktzunge 8 ist eine Drahtaufnahmebereich 11 ausgebildet, dessen Breite mindestens dem Durchmesser des Wicklungsdrahtes 6 entspricht.

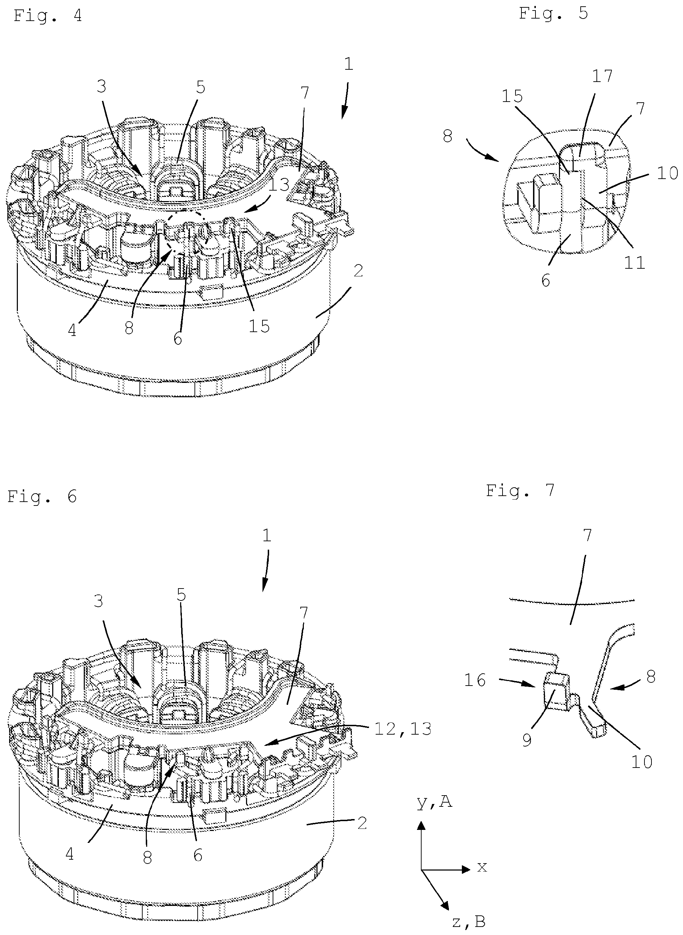

Fig. 4 zeigt eine räumliche Darstellung des bewickelten Stator 1 eines Elektromotors gemäß Figur 2 nach dem Schweißvorgang. Der Stator 1 umfasst den Statorkern 2 mit mindestens einem Statorpol 3, der Isolierkappe 4, die Statorwicklung 5, die aus einem durchgängigen Wicklungsdraht 6 gebildet ist und das Verschaltungsmittel 7 mit mindestens einer Kontaktzunge 8. Das mindestens eine Wicklungsdrahtende 15 der durchtrennten Leiterschleife 12 wird nach dem Biegen und Führen in Richtung Verschaltungsmittel 7 innerhalb der zwei Schenkel 9, 10 im Drahtaufnahmebereich 11 eingequetscht. Von außen wird auf den ersten Schenkel 9 gequetscht, wobei der erste Schenkel 9 in Richtung des zweiten Schenkels 10 verschoben wird und das mindestens eine Wicklungsdrahtende 15 zwischen den zwei Schenkeln 9, 10 fixiert.

Der Wicklungsdraht 6 ist bevorzugt auf die Länge des zweiten Schenkels 10 gekürzt und mit dem zweiten Schenkel 10 verschweißt.

Fig. 5 zeigt eine Detailansicht der Kontaktzunge 8, die an dem Verschaltungsmittel 7 ausgebildet ist, nach dem Schweißvorgang. Der Wicklungsdraht 6 verläuft parallel zu den zwei Schenkeln 9 und 10 im Drahtaufnahmebereich 11. Das Wicklungsdrahtende 15 ist bevorzugt auf die Länge des zweiten Schenkels 10 gekürzt und mit dem zweiten Schenkel 10 verschweißt. Beim Schweißvorgang bilden das Wicklungsdrahtende und der zweite Schenkel 10 eine Schmelzverbindung 17 in Form einer Schmelzkugel.

Fig. 6 zeigt eine räumliche Darstellung eines bewickelten Stators 1 eines Elektromotors gemäß einer weiteren Ausführungsform, umfassend den Statorkern 2 mit mindestens einem Statorpol 3, die Isolierkappe 4, eine Statorwicklung 5, die aus einem durchgängigen Wicklungsdraht 6 gebildet ist und das Verschaltungsmittel 7 mit mindestens einer Kontaktzunge 8. Mit dem durchgängigen Wicklungsdraht 6 werden die Statorpole 5 des Stators 1 bewickelt, wobei der Wicklungsdraht 6 zwischen den Polen mit einer radialen (also in Richtung der x-Achse oder Abszissenachse) Komponente über den Durchmesser des Statorkerns hinaus um den Ausleger 14 herum unter Bildung einer Leiterschleife 12 winkelversetzt zu einem nachfolgend zu bewickelten Statorpol 5 radial nach innen geführt wird (siehe Fig. 1). Die Leiterschleife 12 ist in mindestens einem Leiterschleifenbereich 13 durchtrennt und die Ausleger 14 sind von der Isolierkappe 4 abgetrennt. Das mindestens ein Wicklungsdrahtende 15 der Leiterschleife 12 wird in Richtung Verschaltungsmittel 7 gebogen und geführt, derart, dass das Wicklungsdrahtende unter Bildung einer Drahtschleife 18 um einen Außenbereich 16 des ersten Schenkels 9 herum in Richtung des zweiten Schenkels 10 der Kontaktzunge 8 verläuft. Das Wicklungsdrahtende 15 ist auf die Länge des zweiten Schenkels 10 gekürzt.

Fig. 7 zeigt eine Detailansicht der Kontaktzunge 8 des Verschaltungsmittels 7 gemäß der weiteren Ausführungsform. Die Kontaktzunge 8 umfasst zwei Schenkel 9, 10, wobei der erste Schenkel 9 kürzer ist als der zweite Schenkel 10 und wobei der erste Schenke 9 in Richtung Ordinatenachse und der zweite Schenkel 10 in Richtung Applikatenachse ausgerichtet sind. Zudem ist der Außenbereich 16 am ersten Schenkel 9 gezeigt.

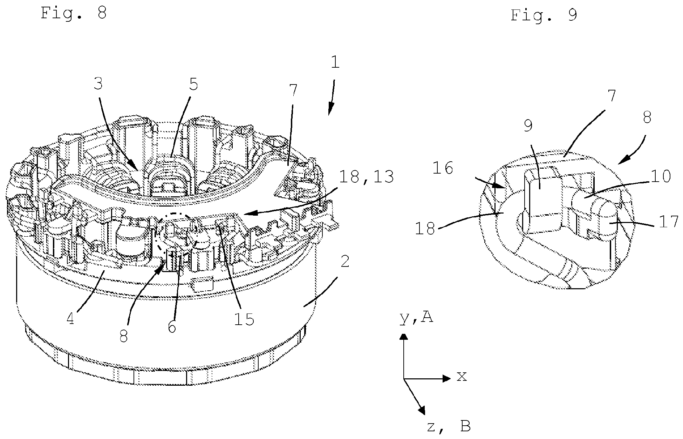

Fig. 8 zeigt eine räumliche Darstellung des bewickelten Stators 1 eines Elektromotors gemäß Figur 6 nach dem Schweißvorgang. Der Stator 1 umfasst den Statorkern 2 mit mindestens einem Statorpol 3, der Isolierkappe 4, eine Statorwicklung 5, die aus einem durchgängigen Wicklungsdraht 6 gebildet ist und das Verschaltungsmittel 7 mit mindestens einer Kontaktzunge 8. Mit dem durchgängigen Wicklungsdraht 6 werden die Statorpole 5 des Stators 1 bewickelt, wobei der Wicklungsdraht 6 zwischen den Polen mit einer radialen Komponente über den Durchmesser des Statorkerns hinaus um den Ausleger 16 herum unter Bildung einer Leiterschleife 12 winkelversetzt zu einem nachfolgend zu bewickelten Statorpol 5 radial nach innen geführt wird (siehe Fig. 1). Die Leiterschleife 12 ist in mindestens einem Leiterschleifenbereich 13 durchtrennt und die Ausleger 16 sind von der Isolierkappe 4 abgetrennt. Das mindestens eine Wicklungsdrahtende 15 der Leiterschleife 12 wird in Richtung Verschaltungsmittel 7 gebogen und geführt, derart, dass das Wicklungsdrahtende unter Bildung einer Drahtschleife 18 um einen Außenbereich 16 des ersten Schenkels 9 herum in Richtung des zweiten Schenkels 10 der Kontaktzunge 8 verläuft. Das Wicklungsdrahtende 15 ist auf die Länge des zweiten Schenkels 10 gekürzt.

Fig. 9 zeigt eine Detailansicht der Kontaktzunge 8 gemäß der weiteren Ausführungsform, die an dem Verschaltungsmittel 7 ausgebildet ist, nach dem Schweißvorgang. Der Wicklungsdraht 6 bildet eine Drahtschleife 18 um den Außenbereich 16 des ersten Schenkels 9 herum in Richtung des zweiten Schenkels 10 der Kontaktzunge 8 und ist auf die Länge des zweiten Schenkels 10 gekürzt. Der Wicklungsdraht 6 liegt dabei auf dem zweiten Schenkel 10 auf. Beim Schweißvorgang bilden das Wicklungsdrahtende 15 und der zweite Schenkel 10 eine Schmelzverbindung 17 in Form einer Schmelzkugel.
- 1: Stator
- 2: Statorkern
- 3: Statorpol
- 4: Isolierkappe
- 5: Statorwicklung
- 6: Wicklungsdraht
- 7: Verschaltungsmittel
- 8: Kontaktzunge
- 9: erster Schenkel
- 10: zweiter Schenkel
- 11: Drahtaufnahmebereich
- 12: Leiterschleife
- 13: Leiterschleifenbereich
- 14: Ausleger
- 15: Wicklungsdrahtende
- 16: Außenbereich
- 17: Schmelzverbindung
- 18: Drahtschleife

- A: Ordinatenachse
- B: Applikatenachse

## Patentansprüche

1. Stator (1) für einen Elektromotor, umfassend:
einen Statorkern (2) mit mindestens einen Statorpol (3), einer Statorwicklung (5), die aus einem durchgängigen Wicklungsdraht (6) gebildet ist, und einem Verschaltungsmittel (7) mit mindestens einer Kontaktzunge (8), wobei der Wicklungsdraht (6) mit mindestens einer Kontaktzunge (8) verschweißt ist, **dadurch gekennzeichnet, dass**
die Kontaktzunge (8) zwei Schenkel (9, 10) umfasst, die in axialer Richtung ausgerichtet sind und eine unterschiedliche Länge aufweisen, wobei der erste Schenkel (9) kürzer ist als der zweite Schenkel (10), wobei ein Wicklungsdrahtende (15) innerhalb der Kontaktzunge (8) parallel zu den Schenkeln (9, 10) verläuft und wobei das Wicklungsdrahtende (15) mit dem zweiten Schenkel (10) verschweißt ist.

2. Stator (1) für einen Elektromotor, umfassend:
einen Statorkern (2) mit mindestens einen Statorpol (3), einer Statorwicklung (5), die aus einem durchgängigen Wicklungsdraht (6) gebildet ist, und einem Verschaltungsmittel (7) mit mindestens einer Kontaktzunge (8), wobei der Wicklungsdraht (6) mit mindestens einer Kontaktzunge (8) verschweißt ist, wobei die Kontaktzunge (8) zwei Schenkel (9, 10) umfasst, wobei der erste Schenkel (9) in Richtung Ordinatenachse (A) und der zweite Schenkel (10) in Richtung Applikatenachse (B) ausgerichtet sind, **dadurch gekennzeichnet, dass** beide Schenkel (9,10)
eine unterschiedliche Länge aufweisen, wobei der erste Schenkel (9) kürzer ist als der zweite Schenkel (10), wobei ein Wicklungsdrahtende (15) unter Bildung einer Drahtschleife um einen Außenbereich (16) des ersten Schenkels (9) herum in Richtung des zweiten Schenkels (10) der Kontaktzunge (8) verläuft und wobei das Wicklungsdrahtende (15) mit dem zweiten Schenkel (10) verschweißt ist.

3. Stator nach einem der vorherigen Ansprüche, wobei die Kontaktzunge (8) einen Drahtaufnahmebereich (11) zwischen dem ersten und zweiten Schenkel (9, 10) umfasst, dessen Breite mindestens dem Durchmesser des Wicklungsdrahtes (6) entspricht.

4. Stator nach einem der vorherigen Ansprüche, wobei der Wicklungsdraht (6) zwischen den zwei Schenkeln (9, 10) verläuft und mit dem zweiten Schenkel (10) verschweißt ist.

5. Stator nach einem der vorherigen Ansprüche, wobei das Verschaltungsmittel (7) als mindestens ein Kontaktblech ausgebildet ist.

6. Stator nach einem der vorherigen Ansprüche, wobei mindestens ein Verschaltungsmittel (7) einstückig ausgebildet ist.

7. .Verfahren zur Herstellung eines Stators für einen Elektromotor nach Anspruch 1, **gekennzeichnet durch** folgende Verfahrensschritte:
a) Einlegen des Stators (1) in eine Wicklungseinrichtung;
b) Bewickeln jeweils eines Statorpols (3) des Stators (1) mit dem Wicklungsdraht (6), wobei der Wicklungsdraht (6) zwischen zwei Polen mit einer radialen Komponente über den Durchmesser des Statorkerns (2) hinaus um einen Ausleger (14) herum und unter Bildung einer Leiterschleife (12) winkelversetzt zu einem nachfolgend zu bewickelnden Statorpol (3) radial nach innen geführt wird;
c) Durchtrennung der Leiterschleife (12) in mindestens einem Leiterschleifbereich (13) der Leiterschleife;
d) Abtrennen des Auslegers (14);
e) Anordnen mindestens eines Verschaltungsmittels (7);
f) Biegen und Führen mindestens eines Wicklungsdrahtendes (15) der durchtrennten Leiterschleife in Richtung Verschaltungsmittel (7), derart, dass das Wicklungsdrahtende (15) innerhalb der Kontaktzunge (8) parallel zu den Schenkeln (9, 10) verläuft;
g) Quetschen des Wicklungsdrahtes (6) von außen auf den ersten Schenkel (9), wobei der erste Schenkel (9) in Richtung des zweiten Schenkel (10) beim Quetschvorgang verschoben wird;
h) Kürzen des Wicklungsdrahtes (6), bevorzugt auf die Länge des zweiten Schenkels (10);
i) Verschweißen des Wicklungsdrahtendes (15) mit dem zweiten Schenkel (10).

8. Verfahren zur Herstellung eines Stators für einen Elektromotor nach Anspruch 2, **gekennzeichnet durch** folgende Verfahrensschritte:
a) Einlegen des Stators (1) in eine Wicklungseinrichtung;
b) Bewickeln jeweils eines Statorpols (3) des Stators (1) mit dem Wicklungsdraht (6), wobei der Wicklungsdraht (6) zwischen zwei Polen mit einer radialen Komponente über den Durchmesser des Statorkerns (2) hinaus um einen Ausleger (16) herum und unter Bildung einer Leiterschleife (12) winkelversetzt zu einem nachfolgend zu bewickelnden Statorpol (3) radial nach innen geführt wird;
c) Durchtrennung der Leiterschleife (12) in mindestens einem Leiterschleifenbereich (13) der Leiterschleife (12);
d) Abtrennen des Auslegers (14)
e) Anordnen mindestens eines Verschaltungsmittels (7);
f) Biegen und Führen mindestens eines Wicklungsdrahtendes (15) der durchtrennten Leiterschleife in Richtung Verschaltungsmittel (7), derart, dass das Wicklungsdrahtende (15) unter Bildung einer Drahtschleife (18) um einem Außenbereich (16) eines erstes Schenkels (9) herum in Richtung eines zweiten Schenkels (10) der Kontaktzunge (8) verläuft;
g) Kürzen des Wicklungsdrahtes (6), bevorzugt auf die Länge des zweiten Schenkels (10);
h) Verschweißen des Wicklungsdrahtendes (15) mit dem zweiten Schenkel (10).

9. Verfahren nach Anspruch 7 oder 8, wobei die Drahtschleife (18) einen engen Radius aufweist und/oder in Kontakt mit dem ersten Schenkel (9) steht.

10. Verfahren nach einem der vorherigen Ansprüche, wobei sich beim Verschweißen des Wicklungsdrahtendes (15) mit dem zweiten Schenkel (10) ein kugelförmiges Schmelzgut ausbildet.

11. Verfahren nach einem der vorherigen Ansprüche, wobei die Kontaktzunge (8) einen Drahtaufnahmebereich (11) zwischen dem ersten und zweiten Schenkel (9, 10) umfasst, wobei das Wicklungsdrahtende (15) im Drahtaufnahmebereich (11) fixiert ist oder fixiert werden kann.

12. Verfahren nach einem der vorherigen Ansprüche, wobei das Schweißverfahren ein Laserschweißverfahren ist.

13. Verfahren nach Anspruch 12, wobei sich die Richtung des Laserstrahls am Wicklungsdrahtende (15) und dem zweiten Schenkel (10) orientiert.

## Claims

1. Stator (1) for an electric motor, comprising:
a stator core (2) having at least one stator pole (3), a stator winding (5), which is formed of a continuous winding wire (6), and an interconnecting means (7) having at least one contact tongue (8), wherein the winding wire (6) is welded to at least one contact tongue (8),
**characterized in that**
the contact tongue (8) comprises two limbs (9, 10), which are oriented in an axial direction and have different lengths, the first limb (9) being shorter than the second limb (10), wherein a winding wire end (15) extends within the contact tongue (8) in a manner parallel to the limbs (9, 10), and wherein the winding wire end (15) is welded to the second limb (10).

2. Stator (1) for an electric motor, comprising:
a stator core (2) having at least one stator pole (3), a stator winding (5), which is formed of a continuous winding wire (6), and an interconnecting means (7) having at least one contact tongue (8), wherein the winding wire (6) is welded to at least one contact tongue (8), wherein the contact tongue (8) comprises two limbs (9, 10), wherein the first limb (9) is oriented in the direction of the ordinate axis (A) and the second limb (10) is oriented in the direction of the applicate axis (B),
**characterized in that**
the two limbs (9, 10) have different lengths, the first limb (9) being shorter than the second limb (10), wherein a winding wire end (15) extends in the direction of the second limb (10) of the contact tongue (8) so as to form a wire loop around an outer region (16) of the first limb (9), and wherein the winding wire end (15) is welded to the second limb (10).

3. Stator according to any of the preceding claims, wherein the contact tongue (8) comprises a wire receiving region (11) between the first and second limbs (9, 10), the width of which wire receiving region corresponds at least to the diameter of the winding wire (6).

4. Stator according to any of the preceding claims, wherein the winding wire (6) extends between the two limbs (9, 10) and is welded to the second limb (10).

5. Stator according to any of the preceding claims, wherein the interconnecting means (7) is in the form of at least one contact plate.

6. Stator according to any of the preceding claims, wherein at least one interconnecting means (7) is formed in one piece.

7. Method for producing a stator for an electric motor according to claim 1, **characterized by** the following method steps:
a) placing the stator (1) in a winding device;
b) winding each stator pole (3) of the stator (1) with the winding wire (6), the winding wire (6) being guided radially inward between two poles, with a radial component extending beyond the diameter of the stator core (2), around a cantilever arm (14), so as to form a conductor loop (12) which is angularly offset relative to a stator pole (3) that is to be wound subsequently;
c) cutting through the conductor loop (12) in at least one conductor loop region (13) of the conductor loop;
d) detaching the cantilever arm (14);
e) arranging at least one interconnecting means (7);
f) bending and guiding at least one winding wire end (15) of the cut-through conductor loop toward the interconnecting means (7) such that the winding wire end (15) extends within the contact tongue (8) in a manner parallel to the limbs (9, 10);
g) crimping the winding wire (6) from outside onto the first limb (9), the first limb (9) being moved toward the second limb (10) during the crimping process;
h) shortening the winding wire (6), preferably to the length of the second limb (10);
i) welding the winding wire end (15) to the second limb (10).

8. Method for producing a stator for an electric motor according to claim 2, **characterized by** the following method steps:
a) placing the stator (1) in a winding device;
b) winding each stator pole (3) of the stator (1) with the winding wire (6), the winding wire (6) being guided radially inward between two poles, with a radial component extending beyond the diameter of the stator core (2), around a cantilever arm (16), so as to form a conductor loop (12) which is angularly offset relative to a stator pole (3) that is to be wound subsequently;
c) cutting through the conductor loop (12) in at least one conductor loop region (13) of the conductor loop (12);
d) detaching the cantilever arm (14);
e) arranging at least one interconnecting means (7);
f) bending and guiding at least one winding wire end (15) of the cut-through conductor loop toward the interconnecting means (7) such that the winding wire end (15) extends in the direction of a second limb (10) of the contact tongue (8) so as to form a wire loop (18) around an outer region (16) of a first limb (9);
g) shortening the winding wire (6), preferably to the length of the second limb (10);
h) welding the winding wire end (15) to the second limb (10).

9. Method according to claim 7 or 8, wherein the wire loop (18) has a tight radius and/or is in contact with the first limb (9).

10. Method according to any of the preceding claims, wherein a spherical molten mass forms as the winding wire end (15) is welded to the second limb (10).

11. Method according to any of the preceding claims, wherein the contact tongue (8) comprises a wire receiving region (11) between the first and second limbs (9, 10), wherein the winding wire end (15) is fixed or can be fixed in the wire receiving region (11).

12. Method according to any of the preceding claims, wherein the welding process is a laser welding process.

13. Method according to claim 12, wherein the direction of the laser beam is oriented toward the winding wire end (15) and the second limb (10).

## Revendications

1. Stator (1) pour un moteur électrique, comprenant :
un noyau de stator (2) avec au moins un pôle de stator (3), un enroulement de stator (5), qui est formé d'un fil d'enroulement continu (6), et un moyen de connexion (7) avec au moins une languette de contact (8), le fil d'enroulement (6) étant soudé à au moins une languette de contact (8), **caractérisé en ce que**
la languette de contact (8) comprend deux branches (9, 10) qui sont orientées dans la direction axiale et présentent des longueurs différentes, la première branche (9) étant plus courte que la deuxième branche (10), un bout du fil d'enroulement (15) s'étendant à l'intérieur de la languette de contact (8) parallèlement aux branches (9, 10) et le bout du fil d'enroulement (15) étant soudé à la deuxième branche (10).

2. Stator (1) pour un moteur électrique, comprenant : un noyau de stator (2) avec au moins un pôle de stator (3), un enroulement de stator (5), qui est formé d'un fil d'enroulement continu (6), et un moyen de connexion (7) avec au moins une languette de contact (8), le fil d'enroulement (6) étant soudé à au moins une languette de contact (8), la languette de contact (8) comprenant deux branches (9, 10), la première branche (9) étant orientée selon l'axe des ordonnées (A) et la deuxième branche (10) étant orientée selon l'axe des abscisses (B), **caractérisé en ce que** les deux branches (9, 10) présentent des longueurs différentes, la première branche (9) étant plus courte que la deuxième branche (10), un bout du fil d'enroulement (15) formant une boucle de fil autour d'une zone extérieure (16) de la première branche (9) en direction de la deuxième branche (10) de la languette de contact (8) et le bout du fil d'enroulement (15) étant soudé à la deuxième branche (10).

3. Stator selon l'une quelconque des revendications précédentes, dans lequel la languette de contact (8) comprend une zone de réception du fil (11) entre la première et la deuxième branche (9, 10), dont la largeur correspond au moins au diamètre du fil d'enroulement (6).

4. Stator selon l'une quelconque des revendications précédentes, dans lequel le fil d'enroulement (6) s'étend entre les deux branches (9, 10) et est soudé à la deuxième branche (10).

5. Stator selon l'une quelconque des revendications précédentes, dans lequel le moyen de connexion (7) est formé comme au moins une tôle de contact.

6. Stator selon l'une quelconque des revendications précédentes, dans lequel le moyen de connexion (7) est formé d'une seule pièce.

7. Procédé de fabrication d'un stator pour un moteur électrique selon la revendication 1, **caractérisé par** les étapes suivantes :
a) insertion du stator (1) dans un dispositif d'enroulement ;
b) enroulement de chaque pôle de stator (3) du stator (1) avec le fil d'enroulement (6), le fil d'enroulement (6) étant guidé entre deux pôles avec une composante radiale au-delà du diamètre du noyau de stator (2) autour d'une console (14) et, en formant une boucle de conducteur (12), décalé angulairement vers un pôle de stator (3) à enrouler ensuite, guidé radialement vers l'intérieur ;
c) sectionnement de la boucle de conducteur (12) dans au moins une zone de boucle de conducteur (13) de la boucle de conducteur ;
d) séparation de la console (14) ;
e) agencement d'au moins un moyen de connexion (7) ;
f) pliage et guidage d'au moins un bout du fil d'enroulement (15) de la boucle de conducteur sectionnée en direction du moyen de connexion (7), de sorte que le bout du fil d'enroulement (15) s'étende à l'intérieur de la languette de contact (8) parallèlement aux branches (9, 10) ;
g) sertissage du fil d'enroulement (6) de l'extérieur sur la première branche (9), la première branche (9) étant déplacée en direction de la deuxième branche (10) lors de l'opération de sertissage ;
h) Raccourcissement du fil d'enroulement (6), de préférence à la longueur de la deuxième branche (10) ;
i) Soudage du bout du fil d'enroulement (15) à la deuxième branche (10).

8. Procédé de fabrication d'un stator pour un moteur électrique selon la revendication 2, **caractérisé par** les étapes suivantes :
a) insertion du stator (1) dans un dispositif d'enroulement ;
b) enroulement de chaque pôle de stator (3) du stator (1) avec le fil d'enroulement (6), le fil d'enroulement (6) étant guidé entre deux pôles avec une composante radiale au-delà du diamètre du noyau de stator (2) autour d'une console (16) et, en formant une boucle de conducteur (12), décalé angulairement vers un pôle de stator (3) à enrouler ensuite, guidé radialement vers l'intérieur ;
c) sectionnement de la boucle de conducteur (12) dans au moins une zone de boucle de conducteur (13) de la boucle de conducteur (12) ;
d) séparation de la console (14) ;
e) agencement d'au moins un moyen de connexion (7) ;
f) pliage et guidage d'au moins un bout du fil d'enroulement (15) de la boucle de conducteur sectionnée en direction du moyen de connexion (7), de sorte que le bout du fil d'enroulement (15) forme une boucle de fil (18) autour d'une zone extérieure (16) d'une première branche (9) en direction d'une deuxième branche (10) de la languette de contact (8) ;
g) raccourcissement du fil d'enroulement (6), de préférence à la longueur de la deuxième branche (10) ;
h) soudage du bout du fil d'enroulement (15) à la deuxième branche (10).

9. Procédé selon la revendication 7 ou 8, dans lequel la boucle de fil (18) présente un rayon étroit et/ou est en contact avec la première branche (9).

10. Procédé selon l'une quelconque des revendications précédentes, dans lequel, lors du soudage du bout du fil d'enroulement (15) à la deuxième branche (10), une masse fondue de forme sphérique se forme.

11. Procédé selon l'une quelconque des revendications précédentes, dans lequel la languette de contact (8) comprend une zone de réception du fil (11) entre la première et la deuxième branche (9, 10), le bout du fil d'enroulement (15) étant fixé ou pouvant être fixé dans la zone de réception du fil (11).

12. Procédé selon l'une quelconque des revendications précédentes, dans lequel le procédé de soudage est un procédé de soudage laser.

13. Procédé selon la revendication 12, dans lequel la direction du faisceau laser est orientée en fonction de l'extrémité du fil d'enroulement (15) et de la deuxième branche (10).
